# EUROPEAN PATENT APPLICATION

(11) **EP 3 578 387 A1**
(43) Date of publication of application: **11.12.2019**
(21) Application number: 18183779.0
(22) Date of filing: 16.07.2018
(51) Int. Cl.: B60B 5/02, B60B 3/02, B60B 3/10, B29C 70/22, B29C 70/46

(54) **REINFORCED STRUCTURE OF WHEEL RIM MADE OF COMPOSITE MATERIAL**

(30) Priority: 05.06.2018 TW 107119302
(71) Applicant: Compositegear Taiwan Co., Ltd., New Taipei City (TW)
(72) Inventor: Chen, Jerry Han-Chieh, New Taipei City (TW)
(74) Representative: Cabinet Chaillot

(57) **Abstract**

A reinforced structure of a wheel rim made of a composite material (1) includes a spoke (20) disposed at the wheel rim and formed by stacking carbon fiber cloths (22, 23, 24), and some of the carbon fiber cloths (23) are set in the direction of the zero angle and extended from the position of the spoke (20) to the position of the wheel frame (10) for stacking, so that the spoke (20) and the wheel frame (10) are coupled to each other to enhance the overall circumferential pressure resistance, impact resistance, torque resistance, and rigidity of the wheel rim (1) or wheel frame (10).

## Description

### BACKGROUND OF THE INVENTION

### Field of the Invention

The present invention relates to a reinforced structure of a wheel rim made of a composite material, and more particularly to a wheel rim made of a composite material and having the features of good circumferential pressure resistance, impact resistance, torque resistance and rigidity.

### Description of the Related Art

A composite material formed by combining carbon fibers with other materials has the features of strong and light texture, high temperature resistance, anti-radiation, water resistance and corrosion resistance, and such composite material is used extensively in the areas of vanes of a large wind generator, car bodies of race cars, cars/motorcycles, and bicycles, or even a large aircraft to reduce the weight. The composite material may also be used for making automobile wheel rims. In general, a wheel rim comprises two major parts, respectively: a wheel frame and a spoke. The wheel frame and spoke of a conventional wheel rim made of a composite material are formed independently, and then combined to form a complete wheel rim. Although the wheel frame and spoke are combined by manufacturing processes, yet the binding force is still insufficient. As to the circumferential pressure resistance of the wheel frame (which is the radial force from the circumferential surface of the wheel frame facing the axis of the wheel frame), there is a pressure resistance error which may affect the impact resistance, torque resistance and rigidity of the whole wheel rim made of a composite material. In view of the drawbacks of the conventional wheel rim, the inventor of the present invention provides an improved design to overcome the drawbacks of the prior art.

### SUMMARY OF THE INVENTION

Therefore, it is a primary objective of the present invention to provide a wheel rim made of a composite material capable of enhancing the circumferential pressure resistance, impact resistance, torque resistance and rigidity of the wheel rim.

To achieve the aforementioned objective, the present invention provides a reinforced structure of a wheel rim made of a composite material, comprising a hollow ring-shaped wheel frame, and a plurality of spokes. The interior of the wheel frame has a frame interior, and the spoke is disposed on a side of the frame interior and extended radially and has an outer end coupled to the wheel frame. The spoke is formed by stacking a plurality of first carbon fiber cloths. A plurality of second fiber cloths is interspersed between the plurality of first carbon fiber cloths, and the second fiber cloth is set in the direction of the zero angle, and extended from the position of the spoke to the position of the wheel frame for stacking to combine the spoke with the wheel frame, so as to enhance the circumferential pressure resistance, impact resistance, torque resistance and rigidity of the whole wheel rim (or wheel frame).

### BRIEF DESCRIPTION OF THE DRAWINGS

Fig. 1 is a perspective view of an embodiment of the present invention;
Fig. 2 is another perspective view of an embodiment of the present invention;
Fig. 3 is a cross-sectional view of an embodiment of the present invention;
Fig. 4 is a block diagram showing the formation steps according to an embodiment of the present invention;
Fig. 5 is an exploded view showing a carbon fiber cloth to be stacked and extended from the position of a spoke to the position of a wheel frame according to an embodiment of the present invention; and
Fig. 6 is a schematic view showing a carbon fiber cloth to be stacked and extended from the position of a spoke to the position of a wheel frame according to an embodiment of the present invention.

### DETAILED DESCRIPTION OF THE PREFERRED EMBODIMENTS

The technical characteristics, contents, advantages and effects of the present invention will be apparent with the detailed description of a preferred embodiment accompanied with related drawings as follows.

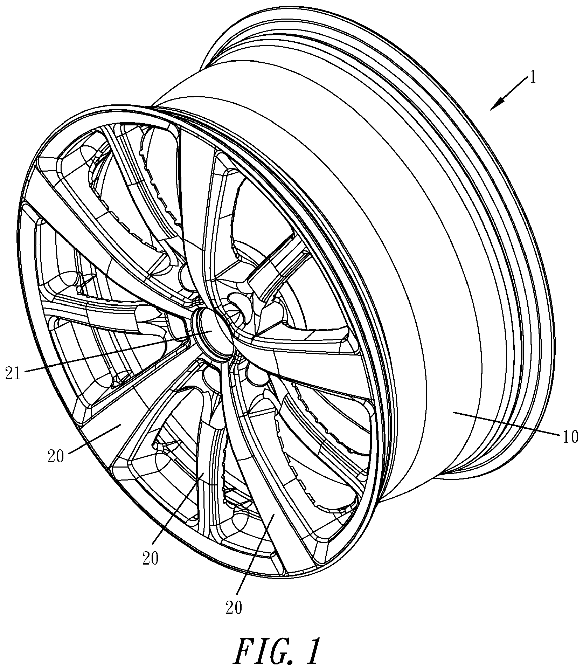

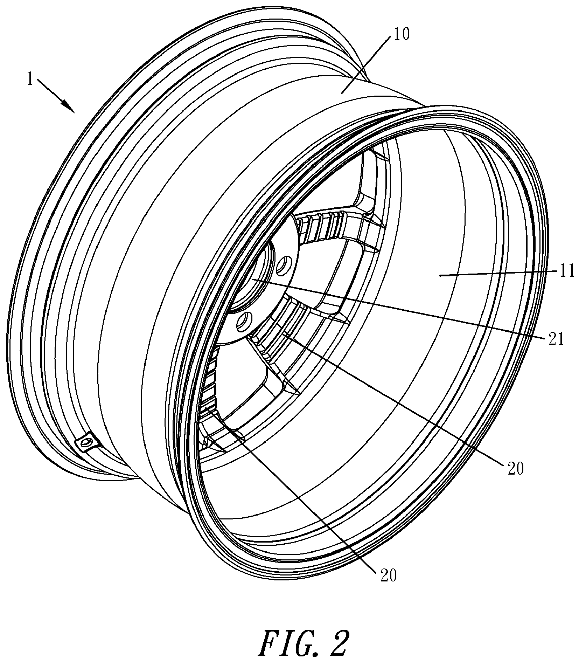

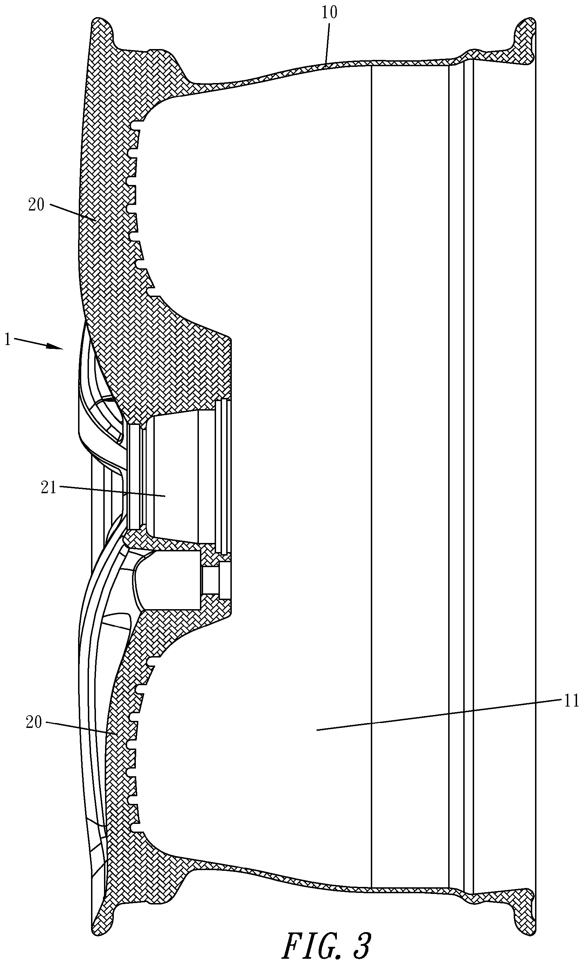

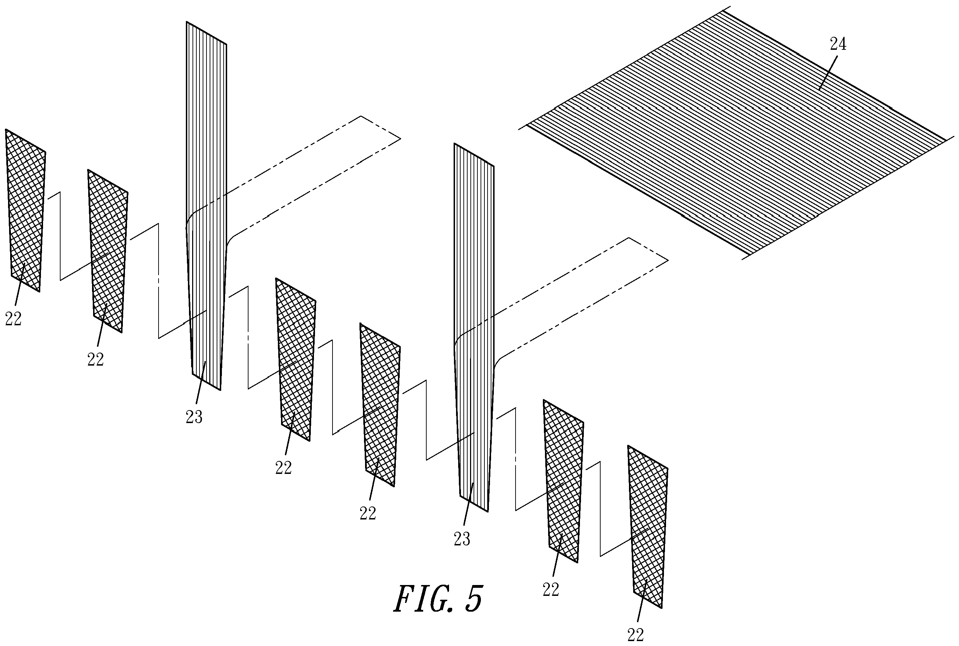

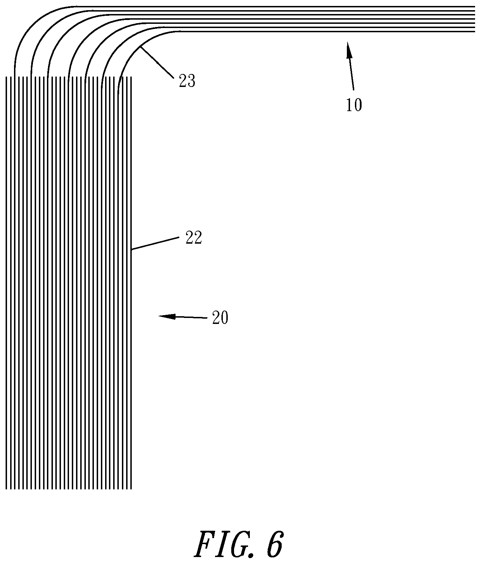

With reference to Figs. 1 to 6 for a wheel rim made of a composite material 1 in accordance with an embodiment of the present invention, the wheel rim made of a composite material 1 comprises a hollow ring-shaped wheel frame 10, and a plurality of spokes 20. Wherein, the external circumferential surface of the wheel frame 10 is provided for fixing a tire, and the interior of the wheel frame has a frame interior 11 for accommodating a brake caliper, a brake disc, etc. The spoke 20 is disposed on a side of the frame interior 11 and has a center hole 21 formed at a position corresponding to the axis of the wheel frame 10 and apart from the wheel frame 10, and each of the spokes 20 is extended radially from the periphery of the center hole 21 and has an outer end coupled to the inner side of the wheel frame 10 to support the wheel frame 10.

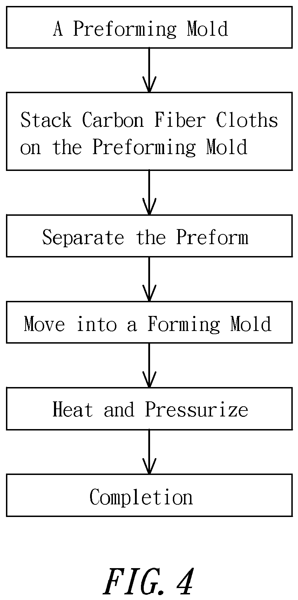

With reference to Figs. 4 to 6 for a plurality of carbon fiber cloths stacked to form the spoke 20, the primary main part of the spoke 20 is formed by crossing and stacking a plurality of first carbon fiber cloths 22 at an angle of ±45 degrees, wherein the first carbon fiber cloths 22 are intersected with each other at the angle of ±45 degrees to enhance the lateral stress of the spoke 20; and the secondary part of the spoke 20 is interspersed between the stacked first carbon fiber cloths 22 and formed by extending a plurality of second carbon fiber cloth 23 in the direction of the zero angle, wherein the second carbon fiber cloths 23 are extended from the position of the spoke 20 and then turned to the position of the wheel frame 10 for stacking, so as to couple the spoke 20 to the wheel frame 10, and the second carbon fiber cloth 23 is extended in the direction of the zero angle to enhance the circumferential pressure resistance of the wheel rim 1 (or wheel frame 10). In addition, a third carbon fiber cloth 24 is stacked on a part of the wheel frame 10 and extended in the direction of the zero angle, wherein the third carbon fiber cloth 24 is perpendicularly intersected and stacked with the second carbon fiber cloth 23.

With reference to Fig. 4 for the formation procedure of the wheel rim in accordance with the present invention, the formation procedure comprises the steps of: (1) preparing a preforming mold; (2) stacking first, second and third carbon fiber cloths 22, 23, 24 on the preforming mold according to the aforementioned configuration, so as to form a prototype of a wheel rim with specific thickness and softness; (3) removing and separating the preform; (4) moving the prototype of the wheel rim into a forming mold; (5) heating and pressurizing the forming mold; and (6) removing the wheel rim made of a composite material from the forming mold to complete the formation procedure.

When the wheel rim 1 of the present invention formed by stacking the carbon fiber cloths, the second carbon fiber cloths 23 are configured in the direction of the zero angle and extended from the position of the spoke 20 to the position of the wheel frame 10 to combine the spokes 20 with the wheel frame 10 to enhance the circumferential pressure resistance, impact resistance, torque resistance and rigidity of the whole wheel rim 1 (or wheel frame 10).

In summation of the description above, the present invention enhances the connection between the spoke and wheel frame of a conventional wheel rim made of a composite material and overcomes the drawback caused by the circumferential pressure resistance error. The invention complies with patent application requirements and is thus duly filed for patent application.

While the present invention has been described by means of specific embodiments, numerous modifications and variations could be made thereto by those skilled in the art without departing from the scope and spirit of the invention set forth in the claims.

## Claims

1. A reinforced structure of a wheel rim made of a composite material (1), comprising a hollow ring-shaped wheel frame (10), and a plurality of spokes (20), wherein the interior of the wheel frame (10) has a frame interior (11), and the spoke (20) is disposed on a side of the frame interior (11) and extended radially and has an outer end coupled to the wheel frame (10); the spoke (20) is formed by stacking a plurality of first carbon fiber cloths (22); **characterized in that** a plurality of second fiber cloths (23) is interspersed between the plurality of first carbon fiber cloths(22), and the second fiber cloth (23) is set in the direction of the zero angle and extended from the position of the spoke (20) to the position of the wheel frame (10) for stacking, so as to couple the spoke (20) and the wheel frame (10) with each other.

2. The reinforced structure of a wheel rim made of a composite material (1) according to claim 1, wherein the first fiber cloths (22) are intersected at an angle of ±45 degrees.

3. The reinforced structure of a wheel rim made of a composite material (1) according to claim 1 or 2, wherein the wheel frame (10) is stacked with a plurality of third carbon fiber cloths (24) extending in a direction of the zero angle, and the third carbon fiber cloth (24) and the second carbon fiber cloth (23) are perpendicularly intersected and stacked with one another.
